# FASCICULE DE BREVET EUROPEEN

(11) **EP 3 387 696 B1**
(45) Date de publication et mention de la délivrance du brevet: **13.11.2019**
(21) Numéro de dépôt: 16805874.1
(22) Date de dépôt: 06.12.2016
(51) Int. Cl.: H01M 10/0569, H01M 10/052, H01M 4/36, H01M 4/38, H01M 4/587, H01M 10/0568

(54) **CELLULE ÉLECTROCHIMIQUE POUR BATTERIE AU LITHIUM COMPRENANT UN ÉLECTROLYTE SPÉCIFIQUE**
ELEKTROCHEMISCHE ZELLE FÜR EINE LITHIUMBATTERIE UMFASSEND EINEN SPEZIFISCHEN ELEKTROLYTEN
ELECTROCHEMICAL CELL FOR LITHIUM BATTERY COMPRISING A SPECIFIC ELECTROLYTE

(30) Priorité: 08.12.2015 FR 1562013
(43) Date de publication de la demande: 17.10.2018
(73) Titulaire: Commissariat à l'Énergie Atomique et aux Énergies Alternatives, 75015 Paris (FR)
(72) Inventeur: GUTEL, Thibaut, 38113 Veurey-voroize (FR); BOUTAFA, Laura, 38130 Echirolles (FR); TOMASI, Daniel, 38119 Villard Saint Christophe (FR)
(74) Mandataire: Brevalex
(86) Numéro de dépôt international: PCT/EP2016/079897
(87) Numéro de publication internationale: WO 2017/097766

(56) Documents cités:
- WO-A1-2010/003069
- CN-A- 105 119 019
- JP-A- H1 131 528
- JP-A- H02 210 768
- JP-A- 2013 016 424
- JP-A- 2015 162 398
- US-A- 4 489 145
- US-A1- 2008 233 485

## Description

### DOMAINE TECHNIQUE

La présente invention a trait à une cellule électrochimique pour batterie au lithium, comprenant un électrolyte spécifique permettant, notamment, d'obtenir de très bonnes performances électrochimiques et, plus particulièrement, une importante rétention de capacité en cyclage et également une efficacité coulombique élevée au premier cycle.

Le domaine général de l'invention peut être ainsi défini comme étant celui des batteries au lithium et, plus spécifiquement, des batteries du type lithium-ion.

Les batteries du type lithium-ion sont de plus en plus utilisées comme source d'énergie autonome, en particulier, dans les équipements électroniques portables (tels que les téléphones mobiles, les ordinateurs portables, l'outillage), où elles remplacent progressivement les accumulateurs nickel-cadmium (NiCd) et nickel-hydrure métallique (NiMH). Elles sont également très utilisées pour fournir l'alimentation en énergie nécessaire aux nouvelles microapplications, telles que les cartes à puce, les capteurs ou autres systèmes électromécaniques.

Les batteries du type lithium-ion fonctionnent sur le principe d'insertion-désinsertion (ou lithiation-délithiation) du lithium selon le principe suivant.

Lors de la décharge de la batterie, le lithium désinséré de l'électrode négative sous forme ionique Li⁺ migre à travers l'électrolyte conducteur ionique et vient s'intercaler dans le réseau cristallin du matériau actif de l'électrode positive. Le passage de chaque ion Li⁺ dans le circuit interne de la batterie est exactement compensé par le passage d'un électron dans le circuit externe, générant ainsi un courant électrique. La densité d'énergie massique libérée par ces réactions est à la fois proportionnelle à la différence de potentiel entre les deux électrodes et à la quantité de lithium qui se sera intercalée dans le matériau actif de l'électrode positive.

Lors de la charge de la batterie, les réactions se produisant au sein de la batterie sont les réactions inverses de la décharge, à savoir que :
- l'électrode négative va insérer du lithium dans le réseau du matériau la constituant ; et
- l'électrode positive va libérer du lithium.

De par ce principe de fonctionnement, les batteries du type lithium-ion nécessitent donc la présence au niveau des électrodes d'un matériau apte à insérer ou désinsérer du lithium mais également d'un électrolyte permettant la conduction d'ions lithium qui soit stable et qui permette d'obtenir de très bonnes performances électrochimiques et, plus particulièrement, une importante rétention de capacité en cyclage et également une efficacité coulombique élevée au premier cycle.

Les auteurs de la présente invention se sont ainsi fixé ce but, en particulier pour des batteries comprenant, comme matériau actif, un matériau composite silicium-graphite.

### EXPOSÉ DE L'INVENTION

Ainsi, l'invention a trait à une cellule électrochimique pour batterie au lithium comprenant une électrode positive et une électrode négative séparée l'une de l'autre par un électrolyte constitué uniquement d'au moins un sel de lithium et d'au moins un composé choisi parmi les composés de la famille des éthers cycliques comprenant au moins un cycle comprenant un atome d'oxygène et au moins une insaturation.

Le choix motivé des ingrédients constitutifs de l'électrolyte susmentionné contribue à l'obtention de très bonnes performances électrochimiques et, plus particulièrement, une importante rétention de capacité en cyclage et également une efficacité coulombique élevée au premier cycle.

L'association d'un sel de lithium et d'un composé de la famille des éthers cycliques comprenant au moins un cycle comprenant un atome d'oxygène et au moins une insaturation est déjà décrite dans l'état de la technique (tel que dans US 4,489,145, JP 2013 016424, US 2008/0233485, JP H11 31528, CN 105 119 019, JP 2015 162398, WO 2010/003069 et JP H02 210768), avec toutefois pour différence que cette association est décrite en combinaison avec d'autres ingrédients et sans indication aucune que cette association puisse permettre d'aboutir aux effets techniques susmentionnés.

Comme mentionné ci-dessus, l'électrolyte comprend, entre autres, au moins un sel de lithium.

Le sel de lithium peut être choisi dans le groupe constitué par LiPF₆, LiClO₄, LiBF₄, LiAsF₆, LiCF₃SO₃, le 4,5-dicyano-2-(trifluorométhyi)imidazolate de lithium (connu sous l'abréviation LiTDI) ou de la famille des sulfonylimidures, tels que le bis(trifluorométhylsulfonyl)imidure de lithium (connu sous l'abréviation LiTFSI) LiN[SO₂CF₃]₂, le bis(fluorosulfonyl)imidure de lithium (connu sous l'abréviation LiFSI) LiN[SO₂F]₂, le 1,1,2,2,3,3-hexafluoropropane-1,3-disulfonylimidure de lithium LiN[SO₂(CF₂)₃SO₂] et les mélanges de ceux-ci, la préférence portant sur le sel LiTFSI.

Le sel de lithium peut être présent, dans l'électrolyte, selon une concentration allant de 0,1M à 5M, par exemple, 1M.

Comme mentionné ci-dessus, l'électrolyte comprend au moins un composé choisi parmi les composés de la famille des éthers cycliques comprenant au moins un cycle comprenant un atome d'oxygène et au moins une insaturation, par exemple, une insaturation ou deux insaturations, lequel composé remplit classiquement la fonction de solvant(s) organique(s).

Plus spécifiquement, selon un premier mode de réalisation, il peut s'agir d'un composé comprenant un cycle comprenant, outre un atome d'oxygène, de 4 à 7 atomes de carbone et comprenant deux insaturations, et encore plus spécifiquement un composé comprenant un cycle comprenant 4 atomes de carbone et deux insaturations, soit, en d'autres termes, un composé appartenant à la famille des composés furanes répondant, par exemple, à la formule (I) suivante : 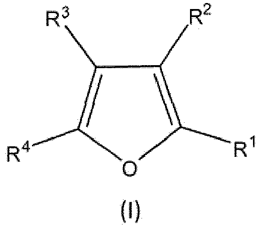 dans laquelle R¹ à R⁴ représentent, indépendamment l'un de l'autre, un atome d'hydrogène ou un groupe alkyle.

En particulier, des composés spécifiques tombant sous le coup de ceux de formule (I) peuvent être :
- un composé dans lequel R¹ à R⁴ représentent un atome d'hydrogène, ce composé étant ainsi représenté par la formule (II) suivante : 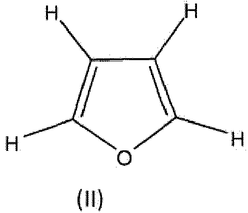 ce composé étant communément désigné par le nom de furane ;
- un composé dans lequel l'un des R¹ à R⁴ est un groupe alkyle, tandis que les autres représentent un atome d'hydrogène, un composé particulier répondant à cette spécificité étant celui répondant à la formule (III) suivante : 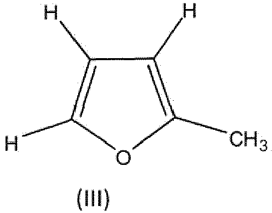 ce composé étant dénommé 2-méthylfurane.

Selon un deuxième mode de réalisation, il peut s'agir d'un composé comprenant un cycle comprenant, outre un atome d'oxygène, de 3 à 7 atomes de carbone et comprenant une insaturation, et encore plus spécifiquement un composé comprenant un cycle comprenant 4 atomes de carbone et une insaturation.

Plus spécifiquement, il peut s'agir d'un composé comprenant un cycle comprenant 4 atomes de carbone et une insaturation répondant à la formule (IV) suivante : 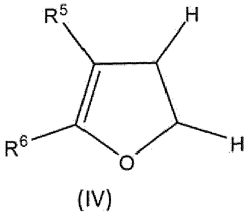 dans laquelle R⁵ et R⁶ représentent, indépendamment l'un de l'autre, un atome d'hydrogène ou un groupe alkyle et, en particulier, dans laquelle l'un des groupes R⁵ et R⁶ représente un groupe alkyle tandis que l'autre groupe représente un atome d'hydrogène, un composé particulier tombant sous le coup de cette définition étant le composé de formule (V) suivante : 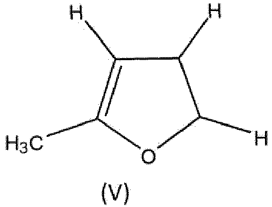 ce composé étant dénommé 2,3-dihydro-5-méthylfurane.

Selon la présente invention, l'électrolyte est constitué uniquement d'au moins un composé éther cyclique comprenant au moins un cycle comprenant un atome d'oxygène et au moins une insaturation et d'au moins un sel de lithium permettant d'obtenir de très bonnes performances électrochimique et, plus spécifiquement, une forte rétention de capacité en cyclage et une efficacité coulombique élevée au premier cycle.

A titre d'exemples, des électrolytes spécifiques susceptibles d'entrer dans la constitution des cellules électrochimiques de l'invention sont :
- un électrolyte comprenant du furane (soit le composé de formule (II) telle que définie ci-dessus) et un sel de lithium LiTFSI, par exemple, à une concentration de 1 mol.L⁻¹ ;
- un électrolyte comprenant du 2-méthylfurane (soit le composé de formule (III) suivante telle que définie ci-dessus) et un sel de lithium LiTFSI, par exemple, à une concentration de 1 mol.L⁻¹; ou
- un électrolyte comprenant du 2,3-dihydro-5-méthylfurane (soit le composé de formule (V) telle que définie ci-dessus) et un sel de lithium LiTFSI, par exemple, à une concentration de 1 mol.L⁻¹.

Comme énoncé plus en amont, les cellules électrochimiques de l'invention comprennent une électrode positive et une électrode négative.

Par électrode positive, on entend classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

On précise que chacune des électrodes comporte un matériau actif, c'est-à-dire un matériau qui est directement impliqué dans les réactions d'insertion et de désinsertion du lithium.

Outre la présence d'un matériau actif, l'électrode peut comprendre un liant polymérique, tel que du polyfluorure de vinylidène (connu sous l'abréviation PVDF), un mélange carboxyméthylcellulose (connu sous l'abréviation CMC) avec un latex du type styrène-butadiène (connu sous l'abréviation SBR) ou avec de l'acide polyacrylique (connu sous l'abréviation PAA) ainsi que un ou plusieurs adjuvants conducteurs de l'électricité, qui peuvent être des matériaux carbonés comme du noir de carbone.

Aussi, d'un point de vue structural, l'électrode peut se présenter sous forme d'un matériau composite comprenant une matrice en liant(s) polymérique(s), au sein de laquelle sont dispersées des charges constituées par le matériau actif et éventuellement le ou les adjuvants conducteurs de l'électricité.

Cela peut être le cas notamment, lorsque l'une des électrodes comporte, comme matériau actif, un matériau composite graphite-silicium, ce matériau composite pouvant être présent à une teneur allant de 50 à 95 % massique par rapport à la masse totale de l'électrode.

Par matériau composite graphite-silicium, on entend classiquement, dans ce qui précède et ce qui suit, un matériau comprenant un agrégat de particules de graphite et de particules de silicium, et selon un mode de réalisation particulier, des particules de silicium agrégées sur des particules de graphite, l'ensemble étant dispersé au sein d'une matrice de carbone, par exemple, une matrice de carboné désordonné.

L'électrode comprenant, comme matériau actif, un matériau composite graphite-silicium, peut être notamment l'électrode positive.

En contrepartie, l'électrode négative peut comprendre, comme matériau actif, du lithium métallique, auquel cas l'électrode négative peut se présenter sous forme d'une feuille en lithium métallique.

Enfin, l'invention a trait à une batterie au lithium comprenant une ou plusieurs cellules électrochimiques telle(s) que définie(s) ci-dessus.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

La figure 1 est un graphique illustrant l'évolution de la capacité spécifique C (en mAh/g) en fonction du nombre de cycles N pour la cellule électrochimique décrite dans l'exemple 1.
La figure 2 est un graphique illustrant l'évolution de l'efficacité (c'est-à-dire le rapport de la capacité spécifique en décharge sur la capacité spécifique en charge exprimé en %) en fonction du nombre de cycles N pour la cellule décrite dans l'exemple 1.
La figure 3 est un graphique illustrant l'évolution de la capacité spécifique C (en mAh/g) en fonction du nombre de cycles N pour les cellules électrochimiques décrites dans l'exemple 2.
La figure 4 est un graphique illustrant l'évolution de l'efficacité (c'est-à-dire le rapport de la capacité spécifique en décharge sur la capacité spécifique en charge exprimé en %) en fonction du nombre de cycles N pour les cellules décrites dans l'exemple 2.

### EXPOSÉ DÉTAILLÉ DE MODES DE RÉALISATION PARTICULIERS

### EXEMPLE 1

Le présent exemple illustre une cellule électrochimique conforme à l'invention se présentant sous forme d'une pile bouton comprenant :
- comme électrode négative, une électrode négative constituée de lithium métallique ; et
- comme électrode positive, une électrode comprenant, comme matériau actif, un composite silicium-graphite ; et
- un électrolyte disposé entre ladite électrode positive et l'électrode négative, dont la composition sera explicitée ci-dessous.

L'électrode négative est obtenue par découpe, dans un feuillard en lithium métallique, d'un disque de diamètre 16 mm.

L'électrode positive est obtenue par enduction, sur une feuille en cuivre, d'une encre composée de 90% massique d'un composite silicium-graphite, 5% massique d'un conducteur électronique (plus spécifiquement, un mélange de noir de carbone de grade Super P® et de fibres de carbone VGCF et 5% massique d'un liant polymérique (plus spécifiquement, un mélange de carboxyméthylcellulose (à 250 000 g/mol) et de acide polyacrylique (à 250 000 g/mol). Cette électrode est calandrée puis découpée sous forme d'un disque de diamètre 14 mm.

La pile bouton est fabriquée à partir de ces électrodes en empilant :
- un disque d'électrode négative ;
- un disque d'électrode positive ; et
- un séparateur composé de la superposition d'un disque en Viledon® (référence FS2207-25-DA WA) (qui est une membrane en fibres non tissées de polyoléfines (polypropylène/polyéthylène)) et d'un disque en Celgard® (référence C2400) (qui est une membrane en polypropylène), lequel séparateur est imbibé d'un électrolyte.

L'électrolyte comprend du furane de formule (II) telle que définie ci-dessus, dans lequel est dissous du LiTFSI à une concentration de 1 mol/L.

Cette cellule est soumise à un test de cyclage galvanostatique, consistant à appliquer un premier cycle de charge/décharge entre 1 V et 0,01 V à un régime C/20 avec un palier à 0,01 V maintenu jusqu'à atteindre un courant correspondant à un régime de C/100 puis un régime de C/5 pour les cycles consécutifs avec un palier à 0,01 V maintenu jusqu'à atteindre un courant correspondant à un régime de C/100 pour chaque cycle.

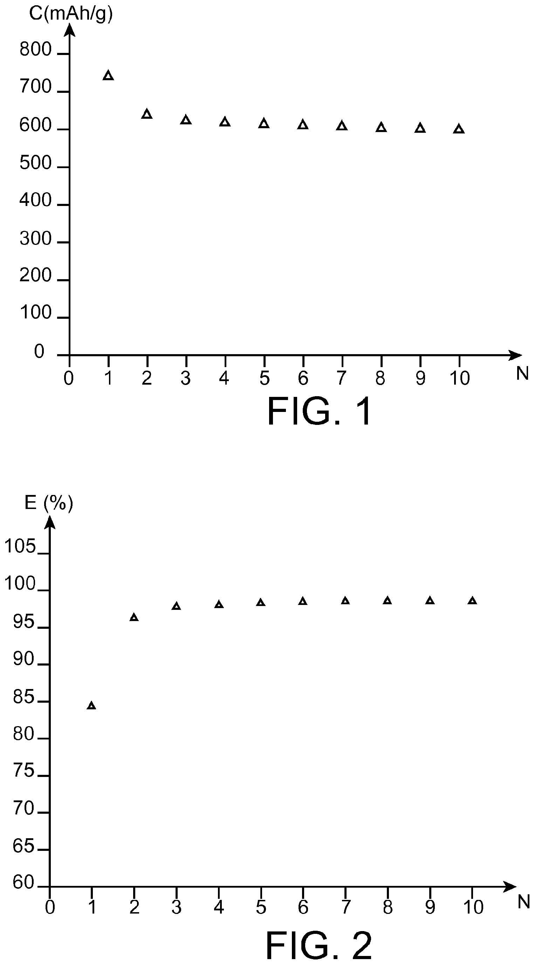

Les résultats sont reportés sur la figure 1, qui illustre l'évolution de la capacité spécifique C (en mAh/g) en fonction du nombre de cycles N pour la cellule susmentionnée.

Il ressort clairement que la cellule conforme à l'invention présente une excellente rétention au cyclage à l'issue de 10 cycles.

En parallèle, il a été également déterminé les efficacités, c'est-à-dire les rapports des capacités en décharge sur les capacités en charge (exprimées pour le matériau actif de l'électrode positive), exprimées en %, en fonction du nombre de cycles, les résultats étant reportés sur la figure 2.

Il ressort clairement de la courbe, que la cellule conforme à l'invention présente une excellente efficacité au premier cycle (supérieure à 80%) puis lors des cycles suivants (proche de 100%).

### EXEMPLE 2

Le présent exemple illustre des cellules électrochimiques conformes à l'invention, se présentant sous forme d'une pile bouton comprenant :
- comme électrode négative, une électrode négative constituée de lithium métallique ; et
- comme électrode positive, une électrode comprenant, comme matériau actif, un composite silicium-graphite ; et
- un électrolyte disposé entre ladite électrode positive et l'électrode négative, dont la composition sera explicitée ci-dessous.

L'électrode négative est obtenue par découpe, dans un feuillard en lithium métallique, d'un disque de diamètre 16 mm.

L'électrode positive est obtenue par enduction, sur une feuille en cuivre, d'une encre composée de 90% massique d'un composite silicium-graphite, 5% massique d'un conducteur électronique (plus spécifiquement, un mélange de noir de carbone de grade Super P® et de fibres de carbone VGCF et 5% massique d'un liant polymérique (plus spécifiquement, un mélange de carboxyméthylcellulose (à 250 000 g/mol) et de acide polyacrylique (à 250 000 g/mol). Cette électrode est calandrée puis découpée sous forme d'un disque de diamètre 14 mm.

Les piles boutons sont fabriquées à partir de ces électrodes en empilant :
- un disque d'électrode positive ;
- un disque d'électrode négative ; et
- un séparateur composé d'un disque en Celgard® de référence C2400 (qui est une membrane en polypropylène), lequel séparateur est imbibé d'un électrolyte.

Les cellules conformes à l'invention sont les suivantes :
- une première cellule comprenant, comme électrolyte, un électrolyte comprenant du furane, dans lequel est dissous du LiTFSI à une concentration de 1 mol/L ;
- une deuxième cellule comprenant, comme électrolyte, un électrolyte comprenant du 2-méthylfurane, dans lequel est dissous du LiTFSI à une concentration de 1 mol/L
- une troisième cellule comprenant, comme électrolyte, un électrolyte comprenant du 2,3-dihydro-5-méthylfurane, dans lequel est dissous du LiTFSI à une concentration de 1 mol/L.

Ces différentes cellules sont soumises à un test de cyclage galvanostatique, consistant à appliquer un premier cycle de charge/décharge entre 3,7 V et 2 V à un régime C/20 avec un palier à 3,7 V maintenu pendant 2 heures puis un régime de C/10 avec un palier de 3,7 V maintenu jusqu'à atteindre un courant correspondant à un régime de C/50 pour le deuxième et enfin un régime de C/5 pour les cycles consécutifs avec un palier à 3,7 V maintenu jusqu'à atteindre un courant correspondant à un régime de C/50 pour chaque cycle.

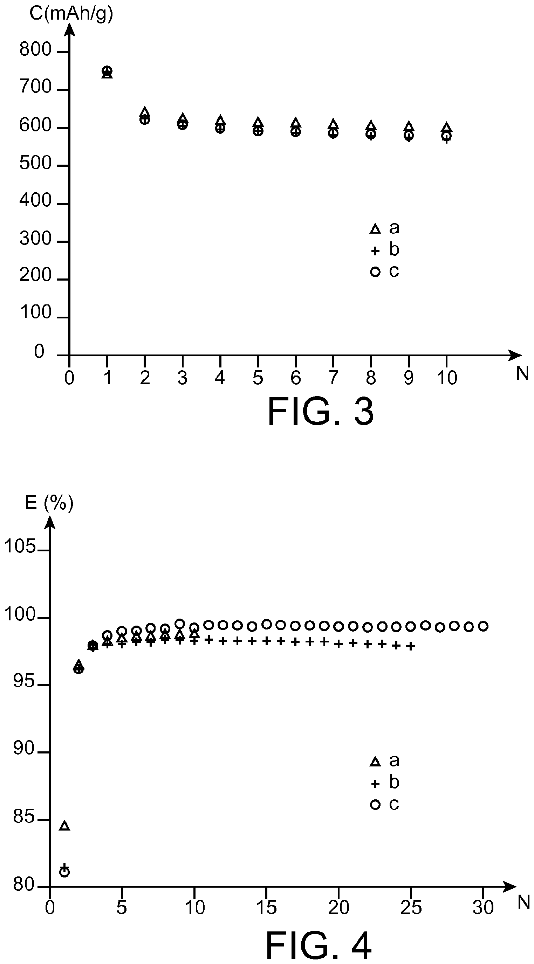

Les résultats sont reportés sur la figure 3, qui illustre l'évolution de la capacité spécifique initiale C (en mAh/g) en fonction du nombre de cycles N, les courbes étant respectivement référencées de courbe a) pour la première cellule susmentionnée à courbe c) pour la troisième cellule susmentionnée.

Il ressort clairement de ces courbes, que les cellules conformes à l'invention présentent une excellente rétention en cyclage (autour de 100%) à l'issue de plus d'une dizaine de cycles.

En parallèle, il a été également déterminé les efficacités, c'est-à-dire les rapports des capacités en décharge sur les capacités en charge, exprimées en %, en fonction du nombre de cycles, les résultats étant reportés sur la figure 4, les courbes étant respectivement référencées de courbe a) pour la première cellule susmentionnée à courbe c) pour la troisième cellule susmentionnée.

Il ressort clairement de ces courbes, que les cellules conformes à l'invention présentent une excellente efficacité au premier cycle (supérieure à 80%) puis lors des cycles suivants (proche de 100%).

## Revendications

1. Cellule électrochimique pour batterie au lithium comprenant une électrode positive et une électrode négative séparée l'une de l'autre par un électrolyte constitué uniquement d'au moins un sel de lithium et d'au moins un composé choisi parmi les composés de la famille des éthers cycliques comprenant au moins un cycle comprenant un atome d'oxygène et au moins une insaturation.

2. Cellule électrochimique selon la revendication 1, dans laquelle le sel de lithium est choisi dans le groupe constitué par LiPF₆, LiClO₄, LiBF₄, LiAsF₆, LiCF₃SO₃, le 4,5-dicyano-2-(trifluorométhyl)imidazolate de lithium ou de la famille des sulfonylimidures, tels que le bis(trifluorométhylsulfonyl)imidure de lithium LiN[SO₂CF₃]₂, le bis(fluorosulfonyl)imidure de lithium LiN[SO₂F]₂, le 1,1,2,2,3,3-hexafluoropropane-1,3-disulfonylimidure de lithium LiN[SO₂(CF₂)₃SO₂] et les mélanges de ceux-ci.

3. Cellule électrochimique selon l'une quelconque des revendications précédentes, dans laquelle le composé comprend un cycle comprenant, outre un atome d'oxygène, de 4 à 7 atomes de carbone et comprenant deux insaturations.

4. Cellule électrochimique selon l'une quelconque des revendications précédentes, dans laquelle le composé comprend un cycle comprenant 4 atomes de carbone et deux insaturations.

5. Cellule électrochimique selon l'une quelconque des revendications précédentes, dans laquelle le composé répond à la formule (I) suivante : 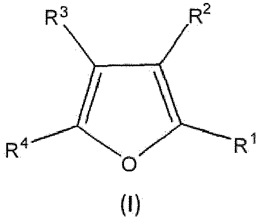 dans laquelle R¹ à R⁴ représentent, indépendamment l'un de l'autre, un atome d'hydrogène ou un groupe alkyle.

6. Cellule électrochimique selon l'une quelconque des revendications précédentes, dans laquelle le composé répond à l'une des formules (II) ou (III) suivantes :

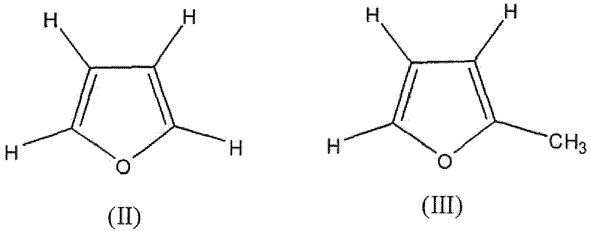

7. Cellule électrochimique selon la revendication 1 ou 2, dans laquelle le composé comprend un cycle comprenant, outre un atome d'oxygène, de 3 à 7 atomes de carbone et comprenant une insaturation.

8. Cellule électrochimique selon l'une quelconque des revendications 1, 2 ou 7, dans laquelle le composé comprend un cycle comprenant 4 atomes de carbone et une insaturation.

9. Cellule électrochimique selon l'une quelconque des revendications 1,2,7 ou 8, dans laquelle le composé répond à la formule (IV) suivante : 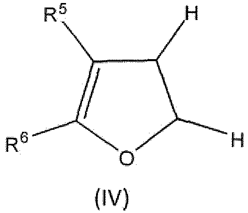 dans laquelle R⁵ et R⁶ représentent, indépendamment l'un de l'autre, un atome d'hydrogène ou un groupe alkyle.

10. Cellule électrochimique selon la revendication 9, dans laquelle l'un des groupes R⁵ et R⁶ représente un groupe alkyle tandis que l'autre groupe représente un atome d'hydrogène.

11. Cellule électrochimique selon l'une quelconque des revendications 1 ou 2 ou 7 à 10, dans laquelle le composé répond à la formule (V) suivante :

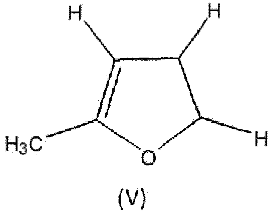

12. Cellule électrochimique selon l'une quelconque des revendications précédentes, dans laquelle l'une des électrodes comporte, comme matériau actif, un matériau composite graphite-silicium.

13. Cellule électrochimique selon l'une quelconque des revendications précédentes, dans laquelle l'électrode positive comprend, comme matériau actif, un matériau composite graphite-silicium.

14. Cellule électrochimique selon l'une quelconque des revendications précédentes, dans laquelle l'électrode négative comprend, comme matériau actif, du lithium métallique.

15. Batterie au lithium comprenant une ou plusieurs cellules électrochimiques telle(s) que définie(s) selon l'une quelconque des revendications 1 à 14.

## Patentansprüche

1. Elektrochemische Zelle für eine Lithiumbatterie, umfassend eine positive Elektrode und eine negative Elektrode, die voneinander durch einen Elektrolyt separiert sind, der ausschließlich aus wenigstens einem Lithiumsalz und wenigstens einer Verbindung gebildet ist, ausgewählt aus den Verbindungen der Famile der zyklischen Ether, umfassend wenigstens einen Ring, der ein Sauerstoffatom und wenigstens eine ungesättigte Bindung umfasst.

2. Elektrochemische Zelle nach Anspruch 1, bei der das Lithiumsalz ausgewählt ist aus der Gruppe gebildet durch LiPF₆, LiClO₄, LiBF₄, LiAsF₆, LiCF₃SO₃, 4,5-Dicyano-2-(Trifluormethyl)Imidazolat von Lithium oder der Familie der Sulfonylimide wie zum Beispiel Bis(Trifluormethylsulfonyl)Imid von Lithium LiN[SO₂CF₃]₂, Bis(Fluorosulfonyl)Imid von Lithium LiN[SO₂F]₂, 1,1,2,2,3,3-Hexafluorpropan-1,3-Disulfonylimid von Lithium LiN[SO₂(CF₂)₃SO₂] und den Mischungen derselben.

3. Elektrochemische Zelle nach einem der vorhergehenden Ansprüche, bei der die Verbindung einen Ring umfasst, der zusätzlich zu einem Sauerstoffatom 4 bis 7 Kohlenstoffatome umfasst, und der zwei ungesättigte Bindungen umfasst.

4. Elektrochemische Zelle nach einem der vorhergehenden Ansprüche, bei der die Verbindung einen Ring umfasst, der 4 Kohlenstoffatome umfasst, und zwei ungesättigte Bindungen.

5. Elektrochemische Zelle nach einem der vorhergehenden Ansprüche, bei der die Verbindung der nachfolgenden Formel (I) genügt: 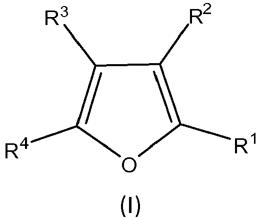 wobei R¹ bis R⁴ unabhängig voneinander ein Wasserstoffatom oder eine Alkylgruppe repräsentieren.

6. Elektrochemische Zelle nach einem der vorhergehenden Ansprüche, bei der die Verbindung einer der nachfolgenden Formeln (II) oder (III) genügt:

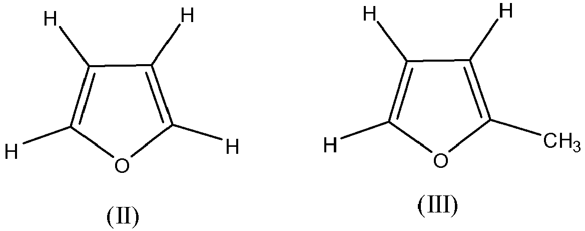

7. Elektrochemische Zelle nach Anspruch 1 oder 2, bei der die Verbindung einen Ring umfasst, der zusätzlich zu einem Sauerstoffatom 3 bis 7 Kohlenstoffatome umfasst, und der eine ungesättigte Bindung umfasst.

8. Elektrochemische Zelle nach einem der Ansprüche 1, 2 oder 7, bei der die Verbindung einen Ring umfasst, der 4 Kohlenstoffatome und eine ungesättigte Bindung umfasst.

9. Elektrochemische Zelle nach einem der Ansprüche 1, 2, 7 oder 8, bei der die Verbindung der nachfolgenden Formel (IV) genügt: 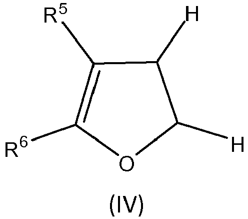 wobei R⁵ und R⁶ unabhängig voneinander ein Wasserstoffatom oder eine Alkylgruppe repräsentieren.

10. Elektrochemische Zelle nach Anspruch 9, bei der eine der Gruppen R⁵ und R⁶ eine Alkylgruppe repräsentiert, wohingegen die andere Gruppe ein Wasserstoffatom repräsentiert.

11. Elektrochemische Zelle nach einem der Ansprüche 1 oder 2 oder 7 bis 10, bei der die Verbindung der nachfolgenden Formel (V) genügt:

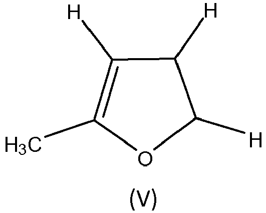

12. Elektrochemische Zelle nach einem der vorhergehenden Ansprüche, bei der eine der Elektroden als aktives Material ein Graphit-Silizium-Verbundmaterial umfasst.

13. Elektrochemische Zelle nach einem der vorhergehenden Ansprüche, bei der die positive Elektrode als aktives Material ein Graphit-Silizium-Verbundmaterial umfasst.

14. Elektrochemische Zelle nach einem der vorhergehenden Ansprüche, bei der die negative Elektrode als aktives Material metallisches Lithium umfasst.

15. Lithiumbatterie, umfassend eine oder mehrere elektrochemische Zellen wie in einem der Ansprüche 1 bis 14 definiert.

## Claims

1. Electrochemical cell for lithium battery, comprising a positive electrode and a negative electrode separated from each by an electrolyte composed solely of at least one lithium salt and at least one compound selected from among the compounds of the cyclic ether family having at least one ring comprising an oxygen atom and at least one unsaturation.

2. The electrochemical cell according to claim 1, wherein the lithium salt is selected from the group formed by LiPF₆, LiClO₄, LiBF₄, LiAsF₆, LiCF₃SO₃, lithium 4,5-dicyano-2-(trifluoromethyl)imidazolate, or the sulfonylimide family such a lithium bis(trifluoromethylsulfonyl)imide LiN[SO₂CF₃]₂, lithium bis(fluorosulfonyl)imide LiN[SO₂F]₂, lithium 1,1,2,2,3,3-hexafluoropropane-1,3-disulfonylimide LiN[SO₂(CF₂)₃SO₂] and mixtures thereof.

3. The electrochemical cell according to any of the preceding claims, wherein the compound comprises a ring which, in addition to an oxygen atom, comprises 4 to 7 carbon atoms and has two unsaturations.

4. The electrochemical cell according to any of the preceding claims, wherein the compound comprises a ring having 4 carbon atoms and two unsaturations.

5. The electrochemical cell according to any of the preceding claims, wherein the compound meets following formula (I): 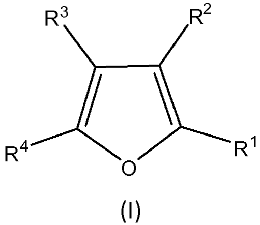 where R¹ to R⁴ are each independently a hydrogen atom or alkyl group.

6. The electrochemical cell according to any of the preceding claims, wherein the compound meets one of the following formulas (II) or (III):

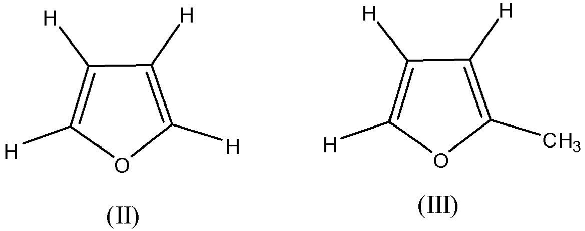

7. The electrochemical cell according to claim 1 or 2, wherein the compound comprises a ring which in, addition to an oxygen atom, comprises 3 to 7 carbon atoms and has one unsaturation.

8. The electrochemical cell according to any of claims 1, 2 or 7, wherein the compound compromises a ring having 4 carbon atoms and one unsaturation.

9. The electrochemical cell according to any of claims 1, 2, 7 or 8, wherein the compound meets following formula (IV): 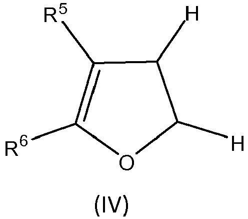 where R⁵ and R⁶ are each independently a hydrogen atom or alkyl group.

10. The electrochemical cell according to claim 9, wherein one of the groups R⁵ and R⁶ is an alkyl group whilst the other group is a hydrogen atom.

11. The electrochemical cell according to any of claims 1 or 2 or 7 to 10, wherein the compound meets following formula (V):

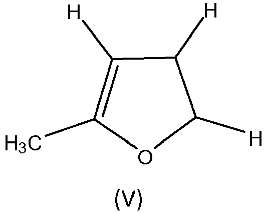

12. The electrochemical cell according to any of the preceding claims, wherein one of the electrodes, as active material, comprises a silicon-graphite composite material.

13. The electrochemical cell according to any of the preceding claims, wherein the positive electrode, as active material, comprises a silicon-graphite composite material.

14. The electrochemical cell according to any of the preceding claims, wherein the negative electrode, as active material, comprises lithium metal.

15. Lithium battery comprising one or more electrochemical cells such as defined in any of claims 1 to 14.
